(19) **Europäisches Patentamt**
**European Patent Office**
**Office européen des brevets**

(11) **EP 4 648 490 A1**

(12) **EUROPEAN PATENT APPLICATION**
published in accordance with Art. 153(4) EPC

(43) Date of publication:
**12.11.2025 Bulletin 2025/46**

(21) Application number: **23914549.3**

(22) Date of filing: **26.12.2023**

(51) International Patent Classification (IPC):
**H04W 52/02** (2009.01)

(52) Cooperative Patent Classification (CPC):
**H04W 52/02; H04W 76/28**

(86) International application number:
**PCT/CN2023/141936**

(87) International publication number:
**WO 2024/146417 (11.07.2024 Gazette 2024/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.01.2023 CN 202310003360**

(71) Applicant: **SHANGHAI LANGBO COMMUNICATION TECHNOLOGY COMPANY LIMITED**
**Shanghai 200240 (CN)**

(72) Inventors:
• **JIANG, Qi**
**Shanghai 201206 (CN)**
• **ZHANG, Xiaobo**
**Shanghai 201206 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **METHOD AND DEVICE FOR NODE USED FOR WIRELESS COMMUNICATION**

(57) The present application discloses a method and device for a node used for wireless communication. A node first receives a first information block and a second information block, wherein the first information block is used for determining a first time period, and the second information block is used for determining a target occasion set; the node then performs measurement on a first wake-up signal and a second wake-up signal, wherein the first wake-up signal is associated with a first occasion, the second wake-up signal is associated with a second occasion, and the first occasion and the second occasion are different; an identifier of the first node is used for determining the first occasion, and the first wake-up signal is used for determining whether to monitor a PDCCH in the first occasion; the first occasion and the second occasion belong to the target occasion set, and a time interval between the first occasion and the second occasion is associated with the first time period. The present application improves measurement in a scenario of saving energy on a terminal side, so as to improve the overall performance of a system.

Fig. 1

**Description**

Technical Field

The present application relates to a transmission method and device in a wireless communication system, in particular to a low-power measurement solution and device in wireless communication.

Background Art

The application scenarios of future wireless communication systems are becoming increasingly diverse, and different application scenarios impose different performance requirements on the system. In order to meet the different performance requirements of various application scenarios, the 3GPP (3rd Generation Partnership Project) RAN (Radio Access Network) plenary #72 resolved to initiate a study on New Radio (NR) technology (or 5G). Subsequently, at the 3GPP RAN plenary #75, the WI (Work Item) for the New Radio (NR) technology was adopted to begin the standardization work on NR.

In the new radio technology, power consumption is an important indicator to measure technical performance. In order to adapt to various application scenarios and meet different needs, 3GPP has been evolving technologies to reduce power consumption.

**Summary of the Invention**

Among various technologies to reduce power consumption, waking up a receiver of user equipment (UE) or network equipment (gNB/eNB) in advance through a wake-up signal is considered to be an effective method. However, the current NR system has a relatively strict definition on the measurement for Layer 3 of the UE. Based on the configuration of its own DRX (Discontinuous Reception) cycle, the UE needs to maintain a certain density of cell selection, cell reselection, Intra-frequency or Inter-frequency measurement in the time domain even in the RRC_IDLE or RRC_INACTIVE state. The continuous wake-up and the operation of turning on the terminal baseband function brought about by the above measurement will inevitably affect the energy saving effect.

In view of the above, the present application discloses a solution. It should be noted that in the description of the present application, only reducing power consumption is used as a typical application scenario or example; and the wake-up signal in the present application is also applicable to other scenarios facing similar problems (such as other scenarios that require pre-wake-up, including but not limited to capacity enhancement systems, short-range communication systems, unlicensed frequency domain communications, IoT (Internet of Things), URLLC (Ultra Reliable Low Latency Communication) networks, Internet of Vehicles, etc.), and similar technical effects can be achieved. In addition, the use of a unified solution for different scenarios (including but not limited to multi-carrier scenarios) also helps reduce hardware complexity and costs. In the absence of conflicts, the embodiments and features in the first node of the present application can be applied to the second node, and vice versa.

In particular, the interpretation of the terminology, terms, functions, and variables in the present application (if not otherwise specified) can refer to the definitions in the 3GPP specification protocol TS36 series, TS38 series, and TS37 series. If necessary, reference can be made to 3GPP standards TS38.211, TS38.212, TS38.213, TS38.214, TS38.215, TS38.321, TS38.331, TS38.305, TS38.304, TS37.355 to assist in understanding the present application.

The present application discloses a method in a first node for wireless communication, comprising:

receiving a first information block and a second information block, wherein the first information block is used for determining a first time period, the second information block is used for determining a target occasion set, and the target occasion set comprises a plurality of occasions; and

performing measurement on a first wake-up signal and a second wake-up signal, wherein the first wake-up signal is associated with a first occasion, the second wake-up signal is associated with a second occasion, and the first occasion and the second occasion are different,

wherein an identifier of the first node is used for determining the first occasion, and the first wake-up signal is used by the first node for determining whether to monitor a PDCCH (Physical Downlink Control Channel) in the first occasion; and the first occasion and the second occasion both belong to the target occasion set, and a time interval between the first occasion and the second occasion is associated with the first time period.

As one embodiment, a feature of the above method lies in that: the first wake-up signal for waking up the first node and the second wake-up signal for waking up other nodes are configured to the first node, and the above two wake-up signals are used for Layer-3 measurement, thereby avoiding the first node from frequently turning on the radio frequency due to performing measurement based on traditional reference signals, so as to save energy.

As one embodiment, another feature of the above method lies in that: the first wake-up signal is used for simultaneously waking up the first node and the Layer-3 measurement of the first node, thereby improving spectrum efficiency and avoiding resource waste.

According to one aspect of the present application, an identity of the first node is used for determining an identifier corresponding to a first device group, and the identifier corresponding to the first device group is used for determining the first wake-up signal; the second information block is used for indicating an identifier corresponding to a second device group, and the identifier corresponding to the second device group is used for determining the second wake-up signal; the first device group comprises at least one terminal, and the first device group comprises the first node; and the second device group comprises at least one terminal, and the second device group does not comprise the first node.

According to one aspect of the present application, a measurement result for the first wake-up signal and a measurement result for the second wake-up signal are filtered to generate a Layer-3 measurement result.

As one embodiment, a feature of the above method lies in that: the measurement result for the first wake-up signal and the measurement result for the second wake-up signal are filtered to obtain a Layer-3 measurement result to improve the measurement accuracy.

According to one aspect of the present application, the method comprises:

receiving a first signal,
wherein the first signal, the first wake-up signal and the second wake-up signal are used together for determining the Layer-3 measurement result. As one embodiment, a feature of the above method lies in that: the first node can still configure a traditional signal for Layer-3 measurement with a lower density, such as SSB (Synchronization Signal/Physical Broadcast Channel Block) or CSI-RS (Channel State Information Reference Signal), and WUS (Wake-Up Signal) for measurement together to improve measurement accuracy.

According to one aspect of the present application, the method comprises:

transmitting target information,
wherein the target information is used for determining that the first node simultaneously supports the first wake-up signal and the second wake-up signal.

According to one aspect of the present application, time domain resources occupied by the first wake-up signal are associated with time domain resources occupied by the second wake-up signal.

As one embodiment, a feature of the above method lies in that: the location of the first wake-up signal and the location of the second wake-up signal are linked to each other, thereby improving measurement accuracy.

According to one aspect of the present application, the target occasion set comprises K1 paging occasions; the K1 paging occasions comprise at least two paging occasions respectively belonging to two paging occasions in two different DRX cycles of one terminal, or the K1 paging occasions comprise at least two paging occasions respectively belonging to two paging occasions in the same DRX cycle of two terminals.

As one embodiment, a feature of the above method lies in that: the configuration of the target occasion set follows some rules, thereby ensuring the accuracy of the Layer-3 measurement results without consuming excessive user energy.

As one embodiment, a feature of the above method lies in that: when the target occasion set comprises all POs, the corresponding WUS signals configured to all terminals in a serving cell can be used by the first node for Layer-3 measurement, thereby further increasing the measurement density to improve the overall performance.

The present application discloses a method in a second node for wireless communication, comprising:

transmitting a first information block and a second information block, wherein the first information block is used for determining a first time period, the second information block is used for determining a target occasion set, and the target occasion set comprises a plurality of occasions; and
transmitting a first wake-up signal and a second wake-up signal, wherein the first wake-up signal is associated with a first occasion, the second wake-up signal is associated with a second occasion, and the first occasion and the second occasion are different, wherein a recipient of the first information block comprises a first node, and the first node performs measurement on the first wake-up signal and the second wake-up signal; an identifier of the first node is used for determining the first occasion, and the first wake-up signal is used by the first node for determining whether to monitor a PDCCH in the first occasion; and the first occasion and the second occasion both belong to the target occasion set, and a time interval between the first occasion and the second occasion is associated with the first time period.

According to one aspect of the present application, the identity of the first node is used for determining an identifier corresponding to a first device group, and the identifier corresponding to the first device group is used for determining the first wake-up signal; the second information block is used for indicating an identifier corresponding to a second device group, and the identifier corresponding to the second device group is used for determining the second wake-up signal; the first device group comprises at least one terminal, and the first device group comprises the first node; and the second device group comprises at least one terminal, and the second device group does not comprise the first node.

According to one aspect of the present application, a measurement result for the first wake-up signal and a measurement result for the second wake-up signal are filtered to generate a Layer-3 measurement result.

According to one aspect of the present application, the method comprises:

transmitting a first signal,

wherein the first signal, the first wake-up signal and the second wake-up signal are used together for determining the Layer-3 measurement result.

According to one aspect of the present application, the method comprises:

receiving target information,

wherein the target information is used for determining that the first node simultaneously supports the first wake-up signal and the second wake-up signal.

According to one aspect of the present application, time domain resources occupied by the first wake-up signal are associated with time domain resources occupied by the second wake-up signal.

According to one aspect of the present application, the target occasion set comprises K1 paging occasions; and the K1 paging occasions comprise at least two paging occasions respectively belonging to two paging occasions in two different DRX cycles of one terminal, or the K1 paging occasions comprise at least two paging occasions respectively belonging to two paging occasions in the same DRX cycle of two terminals.

The present application discloses a first node for wireless communication, comprising:

a first transceiver for receiving a first information block and a second information block, wherein the first information block is used for determining a first time period, the second information block is used for determining a target occasion set, and the target occasion set comprises a plurality of occasions; and a first receiver for performing measurement on a first wake-up signal and a second wake-up signal, wherein the first wake-up signal is associated with a first occasion, the second wake-up signal is associated with a second occasion, and the first occasion and the second occasion are different,

wherein an identifier of the first node is used for determining the first occasion, and the first wake-up signal is used by the first node for determining whether to monitor a PDCCH in the first occasion; and the first occasion and the second occasion both belong to the target occasion set, and a time interval between the first occasion and the second occasion is associated with the first time period.

The present application discloses a second node for wireless communication, comprising:

a second transceiver for transmitting a first information block and a second information block, wherein the first information block is used for determining a first time period, the second information block is used for determining a target occasion set, and the target occasion set comprises a plurality of occasions; and

a first transmitter for transmitting a first wake-up signal and a second wake-up signal, wherein the first wake-up signal is associated with a first occasion, the second wake-up signal is associated with a second occasion, and the first occasion and the second occasion are different,

wherein a recipient of the first information block comprises a first node, and the first node performs measurement on the first wake-up signal and the second wake-up signal; an identifier of the first node is used for determining the first occasion, and the first wake-up signal is used by the first node for determining whether to monitor a PDCCH in the first occasion; and the first occasion and the second occasion both belong to the target occasion set, and a time interval between the first occasion and the second occasion is associated with the first time period.

As one embodiment, the benefit of the solution in the present application is: optimizing the type and configuration manner of the measurement signal in the network energy saving scenario to improve the measurement efficiency, reduce power consumption, and avoid resource waste.

## Brief Description of the Drawings

By reading the detailed description of the non-limiting embodiments in the following drawings, other features, purposes and advantages of the present application will become more obvious:

FIG. 1 shows a processing flowchart of a first node according to one embodiment of the present application;

FIG. 2 shows a schematic diagram of a network architecture according to one embodiment of the present application;

FIG. 3 shows a schematic diagram of an embodiment of a wireless protocol architecture for a user plane and a control plane according to one embodiment of the present application;

FIG. 4 shows a schematic diagram of a first communication device and a second communication device according to one embodiment of the present application;

FIG. 5 shows a flowchart of a first information block and a second information block according to one embodiment of the present application;

FIG. 6 shows a flowchart of a first signal according to one embodiment of the present application;

FIG. 7 shows a flowchart of target information according to one embodiment of the present application;

FIG. 8 shows a schematic diagram of a first wake-up signal and a second wake-up signal according to one embodiment of the present application;

FIG. 9 shows a schematic diagram of a first occasion and a second occasion according to one embodiment of the present application;

FIG. 10 shows a structural block diagram of a processing device in a first node device according to one embodiment of the present application; and

FIG. 11 shows a block diagram of a processing device in a second node device according to one embodiment of the present application.

## Detailed Description of Embodiments

The technical solution of the present application will be further described in detail below in conjunction with the accompanying drawings. It should be noted that, in the absence of conflicts, the embodiments of the present application and the features in the embodiments can be arbitrarily combined with each other.

## Embodiment 1

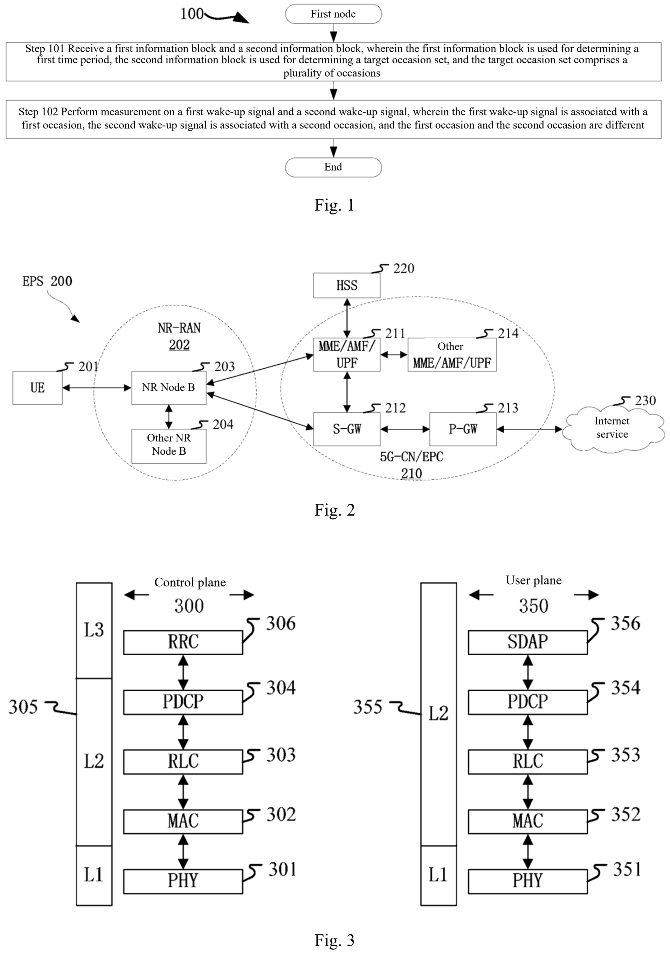

Embodiment 1 illustrates a processing flowchart of one first node, as shown in FIG. 1. In 100 shown in FIG. 1, each block represents one step. In Embodiment 1, the first node in the present application receives a first information block and a second information block in step 101, wherein the first information block is used for determining a first time period, the second information block is used for determining a target occasion set, and the target occasion set comprises a plurality of occasions; and performs measurement on a first wake-up signal and a second wake-up signal in step 102, wherein the first wake-up signal is associated with a first occasion, the second wake-up signal is associated with a second occasion, and the first occasion and the second occasion are different.

In Embodiment 1, an identifier of the first node is used for determining the first occasion, and the first wake-up signal is used by the first node for determining whether to monitor a PDCCH in the first occasion; the first occasion and the second occasion both belong to the target occasion set, and a time interval between the first occasion and the second occasion is associated with the first time period.

As one embodiment, the step 102 comprises: determining to monitor the PDCCH in the first occasion.

As one embodiment, the step 102 comprises: determining to abandon monitoring the PDCCH in the first occasion.

As one embodiment, the first time period is equal to the DRX cycle.

As one embodiment, the first time period is equal to a positive integer multiple of the DRX cycle.

As one embodiment, the first time period is equal to half of the DRX cycle, or the first time period is equal to 1/4 of the DRX cycle, or the first time period is equal to 1/8 of the DRX cycle.

As one embodiment, the first time period is linearly associated with the DRX cycle.

As one embodiment, the DRX cycle associated with the first time period is for the first node.

As one embodiment, the first time period is equal to the SMTC (SS/PBCH Block Measurement Timing Configuration, synchronization signal/physical broadcast channel block measurement timing configuration) time period.

As one embodiment, the SMTC time period associated with the first time period is for the first node.

As one embodiment, the first information block is transmitted through RRC (Radio Resource Control) signaling.

As one embodiment, the first information block comprises part or all of CellGroupConfig IE (Information Elements).

As one embodiment, the first information block comprises part or all of the fields in CellGroupConfig IE.

As one embodiment, the first information block comprises part or all of SCellConfig IE.

As one embodiment, the first information block comprises part or all of the fields in the SCellConfig IE.

As one embodiment, the first information block comprises part or all of DRX-Config IE.

As one embodiment, the first information block comprises part or all of the fields in the DRX-Config IE.

As one embodiment, the first information block comprises part or all of DRX-ConfigSecondaryGroup IE.

As one embodiment, the first information block comprises part or all of the fields in the DRX-ConfigSecondaryGroup IE.

As one embodiment, the first information block comprises part or all of the fields in the MAC-CellGroupConfig IE.

As one embodiment, the first information block comprises part or all of the fields in the MAC-CellGroup Config IE.

As one embodiment, the first information block comprises part or all of RRCReconfiguration message.

As one embodiment, the first information block comprises part or all of the fields in the RRCReconfiguration message.

As one embodiment, the first information block comprises part or all of the CarrierInfoNR field.

As one embodiment, the first information block comprises part or all of the SSB-MTC IE.

As one embodiment, the first information block comprises part or all of the fields in the SSB-MTC IE.

As one embodiment, the name of the RRC signaling carrying the first information block comprises DRX.

As one embodiment, the name of the RRC signaling carrying the first information block comprises Config.

As one embodiment, the name of the RRC signaling carrying the first information block comprises SSB (SS/PBCH Block, synchronization signal/physical broadcast channel block).

As one embodiment, the name of the RRC signaling carrying the first information block comprises MTC.

As one embodiment, the name of the RRC signaling carrying the first information block comprises WUS.

As one embodiment, the name of the RRC signaling carrying the first information block comprises LP.

As one embodiment, the unit of the first time period is a millisecond.

As one embodiment, the unit of the first time period is a subframe.

As one embodiment, the unit of the first time period is a slot.

As one embodiment, the target occasion set comprises a positive integer number of slots greater than 1.

As one embodiment, the target occasion set comprises 1 slot.

As one embodiment, the target occasion set comprises K1 occasions, wherein the K1 is a positive integer.

As one sub-embodiment of this embodiment, the K1 occasions correspond to K1 POs (Paging Occasions) respectively.

As one sub-embodiment of this embodiment, at least one of the K1 occasions is for the first node.

As one sub-embodiment of this embodiment, at least one of the K1 occasions is for a node other than the first node.

As one sub-embodiment of this embodiment, K1 is equal to 1.

As one sub-embodiment of this embodiment, K1 is a positive integer greater than 1.

As one embodiment, the first wake-up signal comprises an LP WUS (Low Power Wake-up Signal).

As one embodiment, the first wake-up signal comprises a WUS (Wake-up Signal).

As one embodiment, the second wake-up signal comprises an LP WUS.

As one embodiment, the second wake-up signal comprises a WUS.

As one embodiment, the first wake-up signal is a wake-up signal for the first node.

As one embodiment, the device group corresponding to the first wake-up signal comprises the first node.

As one embodiment, the ID (Identity) of the first node is associated with the first wake-up signal.

As one embodiment, the ID of the first node is associated with the time domain resources occupied by the first wake-up signal.

As one embodiment, the second wake-up signal is a wake-up signal for a terminal other than the first node.

As one embodiment, the device group corresponding to the second wake-up signal does not comprise the first node.

As one embodiment, the measurement performed on the first wake-up signal and the second wake-up signal comprise Layer-3 measurement.

As one embodiment, the measurement performed on the first wake-up signal and the second wake-up signal comprise measurement on intra-frequency NR cells.

As one embodiment, the measurement performed on the first wake-up signal and the second wake-up signal comprise measurement on inter-frequency NR cells.

As one embodiment, the measurement performed on the first wake-up signal and the second wake-up signal comprise evaluation and measurement on the serving cell.

As one embodiment, the first occasion is the PO of the first node.

As one embodiment, the above feature "the first wake-up signal is associated with the first occasion" means that the time domain resources occupied by the first wake-up signal comprise the first occasion.

As one embodiment, the above feature "the first wake-up signal is associated with the first occasion" means that the time domain resources occupied by the first wake-up signal comprise the PO of the first node, and the first occasion belongs to the PO of the first node.

As one embodiment, the above feature "the first wake-up signal is associated with the first occasion" means that the time interval between the time domain resources occupied by the first wake-up signal and the first occasion is fixed, or is configured through RRC signaling.

As one embodiment, the above feature "the first wake-up signal is associated with the first occasion" means that the first occasion is used for determining the time domain resources occupied by the first wake-up signal.

As one embodiment, the second occasion is the PO of a terminal other than the first node.

As one embodiment, the second occasion is not the PO of the first node.

As one embodiment, the ID of one or more terminals other than the first node is used for determining the second occasion.

As one embodiment, the above feature "the second wake-up signal is associated with the second occasion" means that the time domain resources occupied by the second wake-up signal comprise the second occasion.

As one embodiment, the above feature "the second wake-up signal is associated with the second occasion" means that the time domain resources occupied by the second wake-up signal comprise the PO of the terminal other than the first node, and the second occasion belongs to the PO of the terminal other than the first node.

As one embodiment, the above feature "the second wake-up signal is associated with the second occasion" means that the time interval between the time domain resources occupied by the second wake-up signal and the second occasion is fixed, or is configured through RRC signaling.

As one embodiment, the above feature "the second wake-up signal is associated with the second occasion" means that the second occasion is used for determining the time domain resources occupied by the second wake-up signal.

As one embodiment, the first occasion and the second occasion occupy different slots respectively.

As one embodiment, the first occasion and the second occasion are respectively associated with different UE IDs.

As one embodiment, the first occasion and the second occasion are respectively associated with different device groups.

As one embodiment, the identifier of the first node is a positive integer.

As one embodiment, the identifier of the first node is a non-negative integer.

As one embodiment, the first occasion and the second occasion are respectively associated with different POs corresponding to different UEs.

As one embodiment, the identifier of the first node determines the first occasion according to the manner in Section 7.1 of TS 38. 304.

As one embodiment, the identifier of the first node determines the first occasion in the following manner:

$$ i\_s = \mathrm{floor}\,(UE\_ID/N)\ \mathrm{mod}\ N_s $$

wherein i_s indicates the index of the first occasion, UE_ID corresponds to the identifier of the first node, N represents the number of PFs in a DRX cycle, and $N_s$ represents the number of POs in one PF.

As one embodiment, the identifier of the first node is used for determining the time domain resources occupied by the first occasion.

As one embodiment, the identifier of the first node is used for determining the slot occupied by the first occasion.

As one embodiment, the identifier of the first node is the UE_ID of the first node.

As one embodiment, the identifier of the first node is the 5G-S-TMSI of the first node.

As one embodiment, the identifier of the first node is the value obtained by taking the 5G-S-TMSI of the first node to perform modulo operations on 4096.

As one embodiment, the identifier of the first node is the value obtained by taking the 5G-S-TMSI of the first node to perform modulo operations on 1024.

As one embodiment, the first wake-up signal is used by the first node for determining to monitor the PDCCH in the first occasion.

As one embodiment, the first wake-up signal is used by the first node for determining to abandon monitoring the PDCCH in the first occasion.

As one embodiment, the first occasion and the second occasion are two POs among K1 POs included in the target occasion set.

As one embodiment, the technical feature "the time interval between the first occasion and the second occasion is associated with the first time period" comprises: the time interval between the first occasion and the second occasion is not less than half of the first time period.

As one embodiment, the technical feature "the time interval between the first occasion and the second occasion is associated with the first time period" comprises: the time interval between the first occasion and the second occasion is less than the first time period.

As one embodiment, the technical feature "the time interval between the first occasion and the second occasion is associated with the first time period" comprises: the time interval between the first occasion and the second occasion is linearly associated with the first time period.

As one embodiment, the time interval between the first occasion and the second occasion is equal to the second time period, and the second time period is associated with the first time period.

As one sub-embodiment of this embodiment, the second time period is equal to the product of the first time period multiplied by a first coefficient.

As one dependent embodiment of this sub-embodiment, the first coefficient is a positive integer greater than 1.

As one dependent embodiment of this sub-embodiment, the first coefficient is a decimal between 0 and 1.

As one dependent embodiment of this sub-embodiment, the first coefficient is one of 1/16, 1/8, 1/4 or 1/2.

As one embodiment, the first wake-up signal is associated with a first device group, and the first device group comprises at least one terminal.

As one sub-embodiment of this embodiment, the first device group comprises the first node.

As one embodiment, the second wake-up signal is associated with a second device group, and the second device group comprises at least one terminal.

As one sub-embodiment of this embodiment, the second device group does not comprise the first node.

As one sub-embodiment of this embodiment, the second device group comprises terminals other than the first node.

As one embodiment, the first wake-up signal is a low power wake up signal (LP-WUS).

As one embodiment, the first wake-up signal is a square wave signal.

As one embodiment, the first wake-up signal is a frequency modulation signal.

As one embodiment, the first wake-up signal is a signal using OOK (On/Off Keying).

As one embodiment, the first wake-up signal is a signal using FSK (Frequency Shift Keying).

As one embodiment, the first wake-up signal is a signal using OOK and a constant envelope sequence.

As one embodiment, the first wake-up signal is a signal using FSK and a constant envelope sequence.

As one embodiment, the first wake-up signal is a signal for waking up the baseband processing function of the receiver.

As one embodiment, the first wake-up signal is a signal for waking up the complete baseband processing function of the receiver.

As one embodiment, the first wake-up signal is a signal for waking up the monitoring or reception of the PDCCH.

As one embodiment, the first wake-up signal is a baseband signal or a radio frequency signal.

As one embodiment, the first wake-up signal is generated by OFDM.

As one embodiment, the first wake-up signal is used for reducing power consumption.

As one embodiment, the first wake-up signal is used in the RRC idle state (idle)or RRC inactive state (Inactive).

As one embodiment, the first wake-up signal can be used in the RRC idle state(idle), RRC inactive state (Inactive) and RRC connected state (connected).

As one embodiment, the second wake-up signal is a low power wake up signal (LP-WUS).

As one embodiment, the second wake-up signal is a square wave signal.

As one embodiment, the second wake-up signal is a frequency modulation signal.

As one embodiment, the second wake-up signal is a signal using OOK (On/Off Keying).

As one embodiment, the second wake-up signal is a signal using FSK (Frequency Shift Keying).

As one embodiment, the second wake-up signal is a signal using OOK and a constant envelope sequence.

As one embodiment, the second wake-up signal is a signal using FSK and a constant envelope sequence.

As one embodiment, the second wake-up signal is a signal for waking up a baseband processing function of a receiver.

As one embodiment, the second wake-up signal is a signal for waking up a complete baseband processing function of a receiver.

As one embodiment, the second wake-up signal is a signal for waking up monitoring or reception of a PDCCH.

As one embodiment, the second wake-up signal is a baseband signal or a radio frequency signal.

As one embodiment, the second wake-up signal is generated by OFDM.

As one embodiment, the second wake-up signal is used for reducing power consumption.

As one embodiment, the second wake-up signal is used in the RRC (Radio Resource Control) idle state (idle) or RRC inactive state (Inactive).

As one embodiment, the second wake-up signal can be used in the RRC (Radio Resource Control) idle state (idle), RRC inactive state (Inactive) and RRC connected state (connected).

## Embodiment 2

Embodiment 2 illustrates a schematic diagram of a network architecture, as shown in FIG. 2.

FIG. 2 illustrates a diagram of a network architecture 200 of 5G NR, LTE (Long-Term Evolution) and LTE-A(Long-Term Evolution Advanced) systems. The network architecture 200 of the 5G NR or LTE may be referred to as an EPS (Evolved Packet System) 200 or some other suitable terminologies. The EPS 200 may comprise one piece of UE (User Equipment) 201, an NR-RAN (Next Generation Radio Access Network) 202, an EPC (Evolved Packet Core)/5G-CN (5G-Core Network) 210, a HSS (Home Subscriber Server) 220 and an Internet service 230. The EPS may interconnect with other access networks, but these entities/interfaces are not shown for simplicity. As shown in the figure, the EPS provides packet-switched services, but those skilled in the art will readily appreciate that the various concepts presented throughout the present application may be extended to networks providing circuit-switched services or other cellular networks. The NR-RAN comprises a NR Node B(gNB) 203 and other gNB 204. The gNB 203 provides user and control plane protocol termination toward the UE201. The gNB 203 may be connected to the other gNB 204 via an Xn interface(e.g., backhaul). The gNB 203 may also be referred to as a base station, a base transceiver station, a radio base station, a radio transceiver, a transceiver function, a basic service set (BSS), an extended service set (ESS), a TRP (transmit receive node), or some other suitable terminologies. The gNB 203 provides an access point to the EPC/5G-CN 210 for the UE201. Examples of the UE201 comprise cellular phones, smartphones, Session Initiation Protocol (SIP) phones, laptops, personal digital assistants (PDAs), satellite radio, non-terrestrial base station communications, satellite mobile communications, global positioning systems, multimedia devices, video devices, digital audio players (e.g., MP3 players), cameras, game consoles, drones, aircrafts, narrowband Internet of Things devices, machine type communications devices, land vehicles, automobiles, wearable devices, or any other similarly functional device. Those skilled in the art may also refer to the UE201 as a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terminologies. The gNB 203 is connected to the EPC/5G-CN 210 via a S1/NG interface. The EPC/5G-CN 210 comprises MME (Mobility Management Entity)/AMF (Authentication Management Field)/UPF (User Plane Function) 211, other MME/AMF/UPF214, S-GW (Service Gateway) 212 and P-GW (Packet Data Network Gateway) 213. The MME/AMF/UPF 211 is a control node that handles signaling between the UE201 and the EPC/5G-CN 210. Generally, the MME/AMF/UPF211 provides bearer and connection management. All user IP (Internet Protocol) packets are transmitted through S-GW212, and the S-GW212 itself is connected to the P-GW213. The P-GW213 provides the UE with IP address allocation and other functions. The P-GW213 is connected to the Internet service 230. The Internet service 230 comprises operator-corresponding Internet protocol services, which may specifically comprise Internet, intranet, IMS (IP Multimedia Subsystem) and packet switching streaming services.

As one embodiment, the UE201 corresponds to the first node in the present application.

As one embodiment, the UE201 supports Energy Saving on the terminal side.

As one embodiment, the UE201 supports the reception of the LP WUS.

As one embodiment, the UE201 supports Layer-3 measurement through the LP WUS.

As one embodiment, the NR node B corresponds to the second node in the present application.

As one embodiment, the NR node B supports Energy Saving on the terminal side.

As one embodiment, the NR node B supports the transmitting of the LP WUS.

As one embodiment, the NR node B supports the reporting of Layer-3 measurement through the LP WUS.

As one embodiment, the NR node B is one base station.

As one embodiment, the NR node B is one cell.

As one embodiment, the NR node B comprises a plurality of cells.

As one embodiment, the first node in the present application corresponds to the UE201, and the second node in the present application corresponds to the NR node B.

## Embodiment 3

Embodiment 3 shows a schematic diagram of an embodiment of a wireless protocol architecture for one user plane and one control plane according to the present application, as shown in FIG. 3. FIG. 3 is a schematic diagram illustrating an embodiment of a radio protocol architecture for a user plane 350 and a control plane 300, FIG. 3 shows the radio protocol architecture of the control plane 300 used between a first communication node device (UE, gNB, or RSU in V2X) and a second communication node device (gNB, UE, or RSU in V2X) with three layers: Layer 1, Layer 2 and Layer 3. Layer 1 (L1 layer) is the lowest layer and implements various PHY (physical layer) signal processing functions. The L1 layer will be referred to as PHY301 herein. Layer 2 (L2 layer) 305 is above the PHY301 and is responsible for the link between the first communication node device and the second communication node device through the PHY301. The L2 layer 305 comprises a MAC (Medium Access Control) sublayer 302, an RLC (Radio Link Control) sublayer 303, and a PDCP (Packet Data Convergence Protocol) sublayer 304. These sublayers are terminated at the second communication node device. The PDCP sublayer 304 provides a plurality of multiplexing between different radio bearers and logical channels. The PDCP sublayer 304 also provides security by encrypting data packets, and the PDCP sublayer 304 also provides handoff support from the first communication node device to the second communication node device. The RLC sublayer 303 provides segmentation and reassembly of upper layer data packets, retransmission of lost data packets, and reordering of data packets to compensate for out-of-order reception due to HARQ. The MAC sublayer 302 provides a plurality of multiplexing between logical and transport channels. The MAC sublayer 302 is also responsible for allocating various radio resources (e.g., resource blocks) in one cell between the first communication node devices. The MAC sublayer 302 is also responsible for HARQ operations. The RRC (Radio Resource Control) sublayer 306 in Layer 3 (L3 layer) in the control plane 300 is responsible for obtaining radio resources (i.e., radio bearers) and configuring the lower layers using the same RRC signaling between the second communication node device and the first communication node device. The radio protocol architecture of the user plane 350 comprises Layer 1 (L1 layer) and Layer 2 (L2 layer). The radio protocol architecture for the first communication node device and the second communication node device in the user plane 350 is substantially the same as the corresponding layers and sublayers in the control plane 300 for the physical layer 351, the PDCP sublayer 354 in the L2 layer 355, the RLC sublayer 353 in the L2 layer 355, and the MAC sublayer 352 in the L2 layer 355, but the PDCP sublayer 354 also provides header compression for upper layer data packets to reduce radio transmission overhead. The L2 layer 355 in the user plane 350 also comprises a SDAP (Service Data Adaptation Protocol) sublayer 356. The SDAP sublayer 356 is responsible for

mapping between QoS streams and data radio bearers (DRBs) to support service diversity. Although not shown in the figure, the first communication node device may have several upper layers above the L2 layer 355, comprising a network layer (e.g., IP layer) terminated at the P-GW on the network side and an application layer terminated at the other end of the connection (e.g., remote UE, server, etc.).

As one embodiment, the wireless protocol architecture in FIG. 3 is applicable to the first node in the present application.

As one embodiment, the wireless protocol architecture in FIG. 3 is applicable to the second node in the present application.

As one embodiment, the PDCP304 of the second communication node device is used for generating the scheduling of the first communication node device.

As one embodiment, the PDCP354 of the second communication node device is used for generating the scheduling of the first communication node device.

As one embodiment, the first information block is generated in the RRC306.

As one embodiment, the first information block is generated in the MAC302 or MAC352.

As one embodiment, the second information block is generated in the RRC306.

As one embodiment, the second information block is generated in the MAC302 or MAC352.

As one embodiment, the first wake-up signal is generated in the MAC302 or MAC352.

As one embodiment, the first wake-up signal is generated in the PHY301 or PHY351.

As one embodiment, the second wake-up signal is generated in the MAC302 or MAC352.

As one embodiment, the second wake-up signal is generated in the PHY301 or PHY351.

As one embodiment, the first signal is generated in the RRC306.

As one embodiment, the first signal is generated in the MAC302 or MAC352.

As one embodiment, the first signal is generated in the PHY301 or PHY351.

As one embodiment, the target information is generated in the RRC306.

As one embodiment, the target information is generated in the MAC302 or MAC352.

As one embodiment, the target information is generated in the PHY301 or PHY351.

As one embodiment, the first node is one terminal.

As one embodiment, the first node is one relay.

As one embodiment, the second node is one relay.

As one embodiment, the second node is one base station.

As one embodiment, the second node is one gNB.

As one embodiment, the second node is one TRP (Transmitter Receiver Point).

As one embodiment, the second node is used for managing a plurality of TRPs.

As one embodiment, the second node is a node for managing a plurality of cells.

**Embodiment 4**

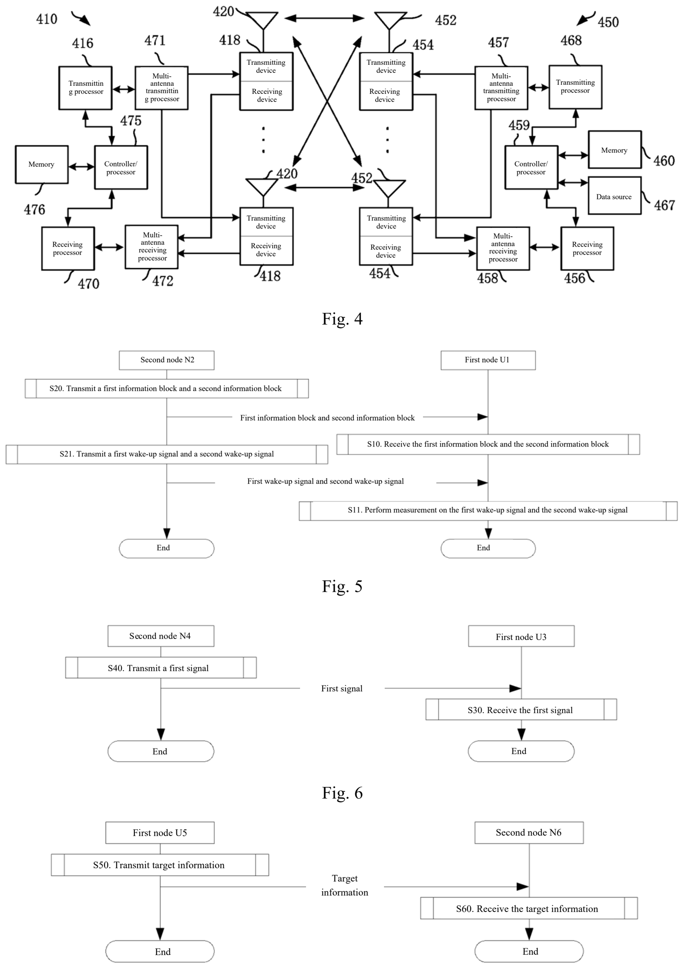

Embodiment 4 shows a schematic diagram of a first communication device and a second communication device according to the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454 and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418 and an antenna 420.

In the transmission from the second communication device 410 to the first communication device 450, at the second communication device 410, upper layer data packets from the core network are provided to the controller/processor 475. The controller/processor 475 implements the functionality of the L2 layer. In the transmission from the second communication device 410 to the first communication device 450, the controller/processor475 provides header compression, encryption, packet segmentation and reordering, and multiplexing between logical and transport channels, and radio resource allocation to the first communication device 450 based on various priority metrics. The controller/processor 475 is also responsible for retransmission of lost packets and signaling to the first communication device 450. The transmitting processor 416 and the multi-antenna transmitting processor 471 implement various signal processing functions for the L1 layer (i.e., physical layer). The transmitting processor 416 implements coding and interleaving to facilitate forward error correction (FEC) at the second communication device 410, as well as mapping of signal constellations based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor471 performs digital spatial precoding, comprising codebook-based precoding and non-codebook-based precoding, and beamforming processing on the coded and modulated symbols to generate one or more spatial streams. The transmitting processor 416 then maps each spatial stream to a subcarrier, multiplexes it with a reference signal (e.g., a pilot) in the time domain and/or frequency domain, and then uses an inverse fast Fourier transform (IFFT) to generate a physical channel carrying a time-domain multi-carrier symbol stream. The multi-antenna transmitting processor 471 then performs transmitting analog precoding/beamforming operations on the time domain multi-carrier symbol stream. Each transmitting device 418 converts the baseband multi-carrier symbol stream provided by the multi-antenna transmitting processor 471 into a radio frequency stream, which is then provided to different antennas 420.

In the transmission from the second communication device 410 to the first communication device 450, at the first communication device 450, each receiving device 454 receives a signal through its corresponding antenna 452. Each receiving device 454 recovers the information modulated onto the RF carrier and converts the RF stream into a baseband multi-carrier symbol stream which is provided to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a fast Fourier transform (FFT) to convert the baseband multi-carrier symbol stream after the receiving analog precoding/beamforming operation from the time domain to the frequency domain. In the frequency domain, the physical layer data signal and the reference signal are demultiplexed by the receiving processor 456, wherein the reference signal will be used for channel estimation, and the data signal is recovered after multi-antenna detection in the multi-antenna receiving processor 458 to obtain any spatial stream with the first communication device 450 as the destination. The symbols on each spatial stream are demodulated and recovered in the receiving processor 456, and soft decisions are generated. The receiving processor 456 then decodes and deinterleaves the soft decisions to recover the upper layer data and control signals transmitted by the second communication device 410 on the physical channel. The upper layer data and control signals are then provided to the controller/processor 459. The controller/processor 459 implements the functions of the L2 layer. The controller/processor 459 may be associated with a memory 460 storing program codes and data. The memory 460 may be referred to as a computer-readable medium. In the transmission from the second communication device 410 to the second communication device 450, the controller/processor 459 provides demultiplexing between transport and logical channels, packet reassembly, decryption, header decompression, control signal processing to recover the upper layer data packets from the core network. The upper layer data packets are then provided to all protocol layers above the L2 layer. Various control signals may also be provided to the L3 for L3 processing.

In the transmission from the first communication device 450 to the second communication device 410, at the first communication device 450, a data source 467 is used to provide an upper layer data packet to the controller/processor 459. The data source 467 represents all protocol layers above the L2 layer. Similar to the transmission function at the second communication device 410 described in the transmission from the second communication device 410 to the first communication device 450, the controller/processor 459 implements header compression, encryption, packet segmentation and reordering, and multiplexing between logical and transport channels based on wireless resource allocation, and implements L2 layer functions for the user plane and the control plane. The controller/processor 459 is also responsible for retransmission of lost packets and signaling to the second communication device 410. The transmitting processor 468 performs modulation mapping and channel coding processing, and the multi-antenna transmitting processor 457 performs digital multi-antenna spatial precoding, comprising codebook-based precoding and non-codebook-based precoding, and beamforming processing. The transmitting processor 468 then modulates the generated spatial stream into a multi-carrier/single-carrier symbol stream, which is then provided to different antennas 452 via the transmitting device 454 after analog precoding/beamforming operations in the multi-antenna transmitting processor 457. Each transmitting device 454 first converts the baseband symbol stream provided by the multi-antenna transmitting processor 457 into a radio frequency symbol stream, which is then provided to the antenna 452.

In the transmission from the first communication device 450 to the second communication device 410, the function at the second communication device 410 is similar to the receiving function at the first communication device 450 described in the transmission from the second communication device 410 to the first communication device 450. Each receiving device 418 receives the radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement the L1 layer function. The controller/processor 475 implements the L2 layer function. The controller/processor 475 may be associated with a memory 476 storing program codes and data. The memory 476 may be referred to as a computer-readable medium. In the transmission from the first communication device 450 to the second communication device 410, the controller/processor 475 provides demultiplexing between transport and logical channels, packet reassembly, decryption, header decompression, control signal processing to recover upper layer data packets from the UE 450. The upper layer data packets from the controller/processor 475 may be provided to the core network.

As one embodiment, the first communication device 450 apparatus comprises: at least one processor and at least one memory, wherein the at least one memory comprise computer program codes; the at least one memory and the computer program codes are configured to be used together with the at least one processor, and the first communication device 450 device at least: first, receives a first information block and a second information block, wherein the first information block is used for determining a first time period, the second information block is used for determining a target occasion set, and the target occasion set comprises a plurality of occasions; then, performs measurement on a first wake-up signal and a second wake-up signal, wherein the first wake-up signal is associated with a first occasion, the second wake-up signal is associated with a second occasion, and the first occasion and the second occasion are different; an identifier of the first node is used for determining the first occasion, and the first wake-up signal is used by the first node for determining whether to monitor a PDCCH in the first occasion; and both the first occasion and the second occasion belong to the target occasion set, and a time interval between the first occasion and the second occasion is associated with the first time period.

As one embodiment, the first communication device 450 comprises: a memory storing a computer-readable instruction program, wherein the computer-readable instruction program generates an action when executed by at least one processor, wherein the action comprises: first, receiving a first information block and a second information block, wherein the first information block is used for determining a first time period, the second information block is used for determining a target occasion set, and the target occasion set comprises a plurality of occasions; then, performing measurement on a first wake-up signal and a second wake-up signal, wherein the first wake-up signal is associated with a first occasion, the second wake-up signal is associated with a second occasion, and the first occasion and the second occasion are different; an identifier of the first node is used for determining the first occasion, and the first wake-up signal is used by the first node for determining whether to monitor a PDCCH in the first occasion; and both the first occasion and the second occasion belong to the target occasion set, and a time interval between the first occasion and the second occasion is associated with the first time period.

As one embodiment, the second communication device 410 apparatus comprises: at least one processor and at least one memory, wherein the at least one memory comprise computer program codes; the at least one memory and the computer program codes are configured to be used together with the at least one processor. The second communication device 410 apparatus at least: first, transmits a first information block and a second information block, wherein the first information block is used for determining a first time period, the second information block is used for determining a target occasion set, and the target occasion set comprises a plurality of occasions; then, transmits a first wake-up signal and a second wake-up signal, wherein the first wake-up signal is associated with a first occasion, the second wake-up signal is associated with a second occasion, and the first occasion and the second occasion are different; a recipient of the first information block comprises a first node, and the first node performs measurement on the first wake-up signal and the second wake-up signal; an identifier of the first node is used for determining the first occasion, the first wake-up signal is used by the first node for determining whether to monitor a PDCCH in the first occasion; and the first occasion and the second occasion both belong to the target occasion set, and a time interval between the first occasion and the second occasion is associated with the first time period.

As one embodiment, the second communication device 410 apparatus comprises: a memory storing a computer-readable instruction program, wherein the computer-readable instruction program generates an action when executed by at least one processor, wherein the action comprises: first, transmitting a first information block and a second information block, wherein the first information block is used for determining a first time period, the second information block is used for determining a target occasion set, and the target occasion set comprises a plurality of occasions; then, transmitting a first wake-up signal and a second wake-up signal, wherein the first wake-up signal is associated with a first occasion, the second wake-up signal is associated with a second occasion, and the first occasion and the second occasion are different; a recipient of the first information block comprises a first node, and the first node performs measurement on the first wake-up signal and the second wake-up signal; an identifier of the first node is used for determining the first occasion, the first wake-up signal is used by the first node for determining whether to monitor a PDCCH in the first occasion; and the first occasion and the second occasion both belong to the target occasion set, and a time interval between the first occasion and the second occasion is associated with the first time period.

As one embodiment, the first communication device 450 corresponds to the first node in the present application.

As one embodiment, the second communication device 410 corresponds to the second node in the present application.

As one embodiment, the first communication device 450 is one piece of UE.

As one embodiment, the first communication device 450 is one terminal.

As one embodiment, the first communication device 450 is one relay.

As one embodiment, the second communication device 410 is one base station.

As one embodiment, the second communication device 410 is one relay.

As one embodiment, the second communication device 410 is one network device.

As one embodiment, the second communication device 410 is one serving cell.

As one embodiment, the second communication device 410 is one TRP.

As one embodiment, at least the first four of the antenna 452, the receiving device 454, the multi-antenna receiving processor 458, the receiving processor 456, or the controller/processor 459 are used for receiving the first information block and the second information block; and at least the first four of the antenna 420, the transmitting device 418, the multi-antenna transmitting processor 471, the transmitting processor 416, or the controller/processor 475 are used for transmitting the first information block and the second information block.

As one embodiment, at least the first four of the antenna 452, the receiving device 454, the multi-antenna receiving processor 458, the receiving processor 456, or the controller/processor 459 are used for performing measurement on the first wake-up signal and the second wake-up signal; and at least the first four of the antenna 420, the transmitting device 418, the multi-antenna transmitting processor 471, the transmitting processor 416, or the controller/processor 475 are used for transmitting the first wake-up signal and the second wake-up signal.

As one embodiment, at least the first four of the antenna 452, the receiving device 454, the multi-antenna receiving processor 458, the receiving processor 456, or the controller/processor 459 are used for determining to monitor the PDCCH and monitor the PDCCH in the first occasion; and at least the first four of the antenna 420, the transmitting device 418, the multi-antenna transmitting processor 471, the transmitting processor 416, or the controller/processor 475 are used for determining to transmit the PDCCH in the first occasion.

As one embodiment, at least the first four of the antenna 452, the receiving device 454, the multi-antenna receiving processor 458, the receiving processor 456, or the controller/processor 459 are used for determining to abandon monitoring the PDCCH in the first occasion; and at least the first four of the antenna 420, the transmitting device 418, the multi-antenna transmitting processor 471, the transmitting processor 416, or the controller/processor 475 are used for determining to abandon transmitting the PDCCH in the first occasion.

As one embodiment, at least the first four of the antenna 452, the receiving device 454, the multi-antenna receiving processor 458, the receiving processor 456, or the controller/processor 459 are used for receiving the first signal; and at least the first four of the antenna 420, the transmitting device 418, the multi-antenna transmitting processor 471, the transmitting processor 416, or the controller/processor 475 are used for transmitting the first signal.

As one implementation, at least the first four of the antenna 452, the transmitting device 454, the multi-antenna transmitting processor 457, the transmitting processor 468, or the controller/processor 459 are used for transmitting target information; and at least the first four of the antenna 420, the receiving device 418, the multi-antenna receiving processor 472, the receiving processor 470, or the controller/processor 475 are used for receiving target information.

**Embodiment** 5

Embodiment 5 illustrates a flowchart of one first information block and one second information block, as shown in FIG. 5. In FIG. 5, the first node U1 communicates with the second node N2 via a wireless link. It is particularly noted that the order in this embodiment does not limit the signal transmission order and implementation order in the present application. In the absence of conflicts, the embodiments, sub-embodiments and dependent embodiments in Embodiment 5 can be applied to Embodiment 6 or 7; conversely, in the absence of conflicts, any embodiment, sub-embodiment and dependent embodiment in Embodiment 6 or 7 can be applied to Embodiment 5.

For the first node U1, a first information block and a second information block are received in step S10; and measurement is performed on the first wake-up signal and the second wake-up signal in step S11.

For the second node N2, a first information block and a second information block are transmitted in step S20; and a first wake-up signal and a second wake-up signal are transmitted in step S21.

In Embodiment 5, the first information block is used for determining a first time period, the second information block is used for determining a target occasion set, and the target occasion set comprises a plurality of occasions; the first wake-up signal is associated with a first occasion, the second wake-up signal is associated with a second occasion, and the first occasion and the second occasion are different; an identifier of the first node is used for determining the first occasion, and the first wake-up signal is used by the first node for determining whether to monitor a PDCCH in the first occasion; and the first occasion and the second occasion both belong to the target occasion set, and a time interval between the first occasion and the second occasion is associated with the first time period.

As one embodiment, the step S11 comprises determining to monitor the PDCCH in the first occasion.

As one embodiment, the step S11 comprises monitoring the PDCCH in the first occasion.

As one embodiment, the step S11 comprises determining to abandon monitoring the PDCCH in the first occasion.

As one embodiment, the step S11 comprises receiving the first wake-up signal and the second wake-up signal.

As one embodiment, the step S21 comprises determining to transmit the PDCCH in the first occasion.

As one embodiment, the step S21 comprises transmitting the PDCCH in the first occasion.

As one embodiment, the step S21 comprises determining to abandon transmitting the PDCCH in the first occasion.

Typically, the identity of the first node is used for determining an identifier corresponding to a first device group, and the identifier corresponding to the first device group is used for determining the first wake-up signal; the second information block is used for indicating an identifier corresponding to a second device group, and the identifier corresponding to the second device group is used for determining the second wake-up signal; the first device group comprises at least one terminal, and the first device group comprises the first node; and the second device group comprises at least one terminal, and the second device group does not comprise the first node.

Typically, a measurement result for the first wake-up signal and a measurement result for the second wake-up signal are filtered to generate a Layer-3 measurement result.

As one embodiment, the Layer-3 measurement comprises RRM (Radio Resource Management) measurement.

As one embodiment, the Layer-3 measurement comprises RLM (Radio Link Monitoring) measurement.

As one embodiment, the Layer-3 measurement comprises serving cell measurement.

As one embodiment, the Layer-3 measurement comprises inter-cell measurement.

As one embodiment, the Layer-3 measurement comprises inter-frequency measurement.

As one embodiment, the measurement result for the first wake-up signal comprises an RSSI (Received Signal Strength Indicator).

As one embodiment, the measurement result for the first wake-up signal comprises energy.

As one embodiment, the measurement result for the first wake-up signal comprises RSRP (Reference Signal Receiving Power).

As one embodiment, the measurement result for the first wake-up signal comprises RSRQ (Reference Signal Receiving Quality).

As one embodiment, the unit of the measurement result for the first wake-up signal comprises dBm.

As one embodiment, the measurement result for the second wake-up signal comprises RSSI.

As one embodiment, the measurement result for the second wake-up signal comprises energy.

As one embodiment, the measurement result for the second wake-up signal comprises RSRP.

As one embodiment, the measurement result for the second wake-up signal comprises RSRQ.

As one embodiment, the unit of the measurement result for the second wake-up signal comprises dBm.

As one embodiment, the measurement result for the first wake-up signal, the measurement result for the second wake-up signal, and the measurement result for other wake-up signals are filtered together to generate the Layer-3 measurement result.

As one sub-embodiment of this embodiment, the other wake-up signals are wake-up signals for a device group other than the first device group and the second device group in the present application.

As one embodiment, the measurement result for the first wake-up signal and the measurement result for the second wake-up signal are only used for measurement and evaluation of the serving cell.

As one embodiment, the measurement result for the first wake-up signal and the measurement result for the second wake-up signal are not used for measurement of Inter-Cell.

As one embodiment, the measurement result for the first wake-up signal and the measurement result for the second wake-up signal are not used for measurement of intra-frequency NR cells.

As one embodiment, the measurement result for the first wake-up signal and the measurement result for the second wake-up signal are not used for measurement of inter-frequency NR cells.

As one embodiment, the measurement result for the first wake-up signal and the measurement result for the second wake-up signal are not used for measurement of inter-RAT E-UTRAN cells.

Typically, the time domain resources occupied by the first wake-up signal are associated with the time domain resources occupied by the second wake-up signal.

As one embodiment, the time domain resources occupied by the first wake-up signal and the time domain resources occupied by the second wake-up signal belong to the same PO.

As one embodiment, the identifier corresponding to the second device group is a positive integer multiple of the identifier corresponding to the first device group.

As one embodiment, the ID of the terminal included in the second device group is associated with the ID of the terminal included in the first device group. Typically, the target occasion set comprises K1 paging occasions; the K1 paging occasions comprise at least two paging occasions respectively belonging to two paging occasions in two different DRX cycles of one terminal, or the K1 paging occasions comprise at least two paging occasions respectively belonging to two paging occasions in the same DRX cycle of two terminals.

As one embodiment, the K1 POs comprise all POs configured by the second node in the present application.

As one embodiment, the K1 POs comprise all POs configured by the serving cell of the first node for all user equipment.

As one embodiment, the PF where the K1 POs are located is determined as follows:

$$SFN \bmod T = (T \text{ div } N) * k;$$

wherein T represents the DRX cycle; N corresponds to the smaller value of T and nB; k is equal to 0 to N-1; and nB is configurable and associated with T.

As one embodiment, the index i_s of the K1 POs in the corresponding PF is determined as follows:

[0274] - The index i_s corresponds to i_s determined according to the value of $N_s$ in the table in Section 7.2 of TS 36. 304 in a subframe defining the PO, wherein $N_s$ corresponds to the larger value of 1 and nB/T.

Embodiment 6

Embodiment 6 illustrates a flowchart of one first signal, as shown in FIG. 6. In FIG. 6, the first node U3 communicates with the second node N4 via a wireless link. It is particularly noted that the order in this embodiment does not limit the signal transmission order and implementation order in the present application. In the absence of conflicts, the embodiments, sub-embodiments and dependent embodiments in Embodiment 6 can be applied to Embodiment 5 or 7; and conversely, in the absence of conflicts, any embodiment, sub-embodiment and dependent embodiment in Embodiment 5 or 7 can be applied to Embodiment 6.

For the first node U3, a first signal is received in step S30.

For the second node N4, a first signal is transmitted in step S40.

In Embodiment 6, the first signal, the first wake-up signal, and the second wake-up signal are used together for determining the result of the Layer-3 measurement.

As one embodiment, the first signal comprises SSB.

As one embodiment, the first signal comprises CSI-RS.

As one embodiment, the first signal comprises PTRS (Phase Tracking Reference Signal).

As one embodiment, the first signal comprises PRS (Positioning Reference Signal).

As one embodiment, the first wake-up signal is used for generating a first measurement result, the second wake-up signal is used for generating a second measurement result, and the first signal is used for generating a third measurement result; and the Layer-3 measurement result is linearly related with the first measurement result, the second measurement result, and the third measurement result.

As one embodiment, the first wake-up signal is used for generating a first measurement result, the second wake-up signal is used for generating a second measurement result, and the first signal is used for generating a third measurement result; and the first measurement result, the second measurement result and the third measurement result are filtered by Layer 3 to obtain the Layer-3 measurement result.

As one embodiment, the step S30 is located after step S11 in Embodiment 5.

As one embodiment, the step S40 is located after step S21 in Embodiment 5.

Embodiment 7

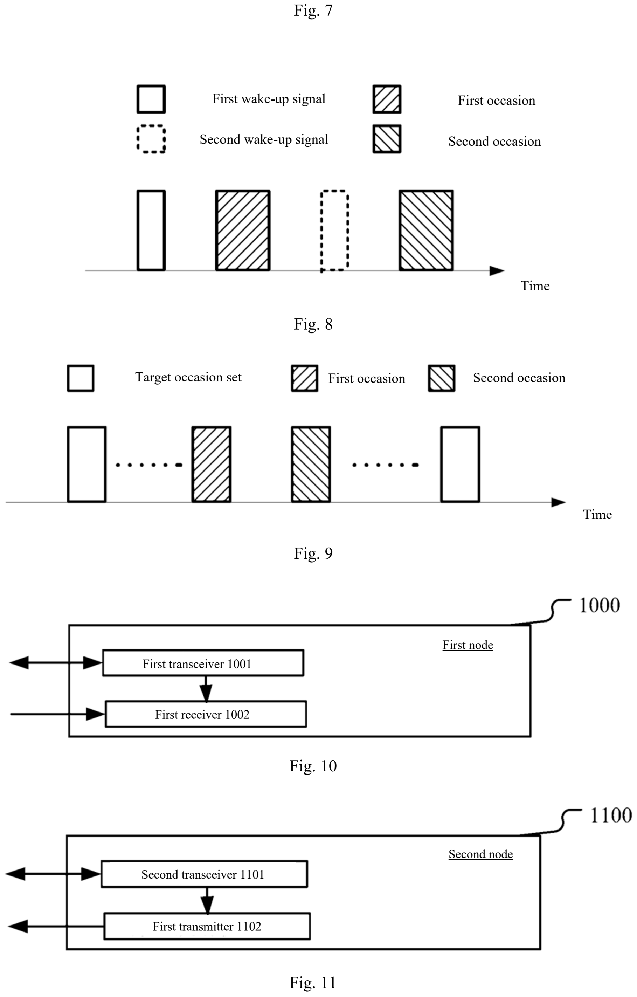

Embodiment 7 illustrates a flowchart of one piece of target information, as shown in FIG. 7. In FIG. 7, the first node U5 communicates with the second node N6 via a wireless link. It is particularly noted that the order in this embodiment does not limit the signal transmission order and implementation order in the present application. In the absence of conflicts, the embodiments, sub-embodiments and dependent embodiments in Embodiment 7 can be applied to Embodiment 5 or 6; and conversely, in the absence of conflicts, any embodiment, sub-embodiment and dependent embodiment in Embodiment 5 or 6 can be applied to Embodiment 7.

For the first node U5, the target information is transmitted in step S50.

For the second node N6, the target information is received in step S60.

In Embodiment 7, the target information is used for determining whether the first node simultaneously supports the first wake-up signal and the second wake-up signal.

As one embodiment, the target information is used for indicating the capability of the first node device.

As one embodiment, the target information is transmitted through an air interface or a wireless interface.

As one embodiment, the target information is also transmitted through an X2 interface, an Xn interface, or an NG interface.

As one embodiment, the target information is also transmitted among network nodes.

As one embodiment, the target information is received by the network node through the RAN interface and then transmitted to another network node or to the core network.

As one embodiment, the target information is received by the network node through the Uu interface and then transmitted to another network node or to the core network.

As one embodiment, the target information comprises all or part of the high-level signaling or the physical layer signaling.

As one embodiment, the target information is earlier than the first information block and the second information block.

As one embodiment, the target information is later than the first information block and the second information block.

As one embodiment, the target information is earlier than the first wake-up signal and the second wake-up signal.

As one embodiment, the target information is later than the first wake-up signal and the second wake-up signal.

As one embodiment, the target information comprises all or part of the RRC signaling, or the target information comprises all or part of the MAC layer signaling.

As one embodiment, the target information is transmitted via a PUSCH (Physical Uplink Shared Channel) or a PUCCH (Physical Uplink Control Channel).

As one embodiment, the target information is per UE, or the target information is per feature set, or the target information is per band, or the target information is per band combination, or the target information is per band list, or the target information is per frequency range, or the target information is per duplex mode.

As one embodiment, the target information is associated with the frequency range.

As one embodiment, the target information is associated with the duplex type (TDD or FDD).

As one embodiment, the target information comprises all or part of UE-NR-Capability IE.

As one embodiment, the target information comprises all or part of "UE-RadioPagingInfo".

As one embodiment, the target information comprises all or part of "UERadioPaginginformation".

As one embodiment, the target information comprises all or part of "UE-NR-Capability-v1900".

As one embodiment, the target information comprises all or part of "LPWUS-Parameters-v1900".

As one embodiment, the target information comprises all or part of "lpwus-SubgroupingSupport-BandList-r19".

As one embodiment, the target information is used for indicating the UE capability required for paging.

As one embodiment, the number of frequency bands indicated by the target information is not greater than 1024.

As one embodiment, the target information is also used for indicating the receiver parameter values supported by the first node device.

As one embodiment, the target information is also used for indicating the receiver type supported by the first node device.

As one embodiment, the target information is also used for indicating the receiving parameter value of the wake-up signal supported by the first node device.

As one embodiment, the target information is also used for indicating at least one configuration parameter value of the wake-up signal supported by the first node device.

As one embodiment, the step S50 is located before step S10 in Embodiment 5.

As one embodiment, the step S60 is located before step S20 in Embodiment 5.

**Embodiment 8**

Embodiment 8 illustrates a schematic diagram of one first wake-up signal and one second wake-up signal, as shown in FIG. 8. In FIG. 8, the first wake-up signal is located before the first occasion, and the second wake-up signal is located before the second occasion.

As one embodiment, the time interval between the first wake-up channel and the first occasion is fixed or configured by RRC.

As one embodiment, the time interval between the second wake-up channel and the second occasion is fixed or configured by RRC.

As one embodiment, the first wake-up signal is located in one slot in the time domain.

As one embodiment, the second wake-up signal is located in one slot in the time domain.

As one embodiment, the first occasion occupies one slot in the time domain.

As one embodiment, the second occasion occupies one slot in the time domain.

As one embodiment, the time domain resources occupied by the first wake-up signal and the time domain resources occupied by the first occasion belong to one PF (Paging Frame).

As one embodiment, the time domain resources occupied by the second wake-up signal and the time domain resources occupied by the second occasion belong to one PF.

As one embodiment, the time domain resources occupied by the first wake-up signal are configured through RRC signaling.

As one embodiment, the time domain resources occupied by the second wake-up signal are configured through RRC signaling.

As one embodiment, the time domain resources occupied by the first wake-up signal are associated with the UE ID of the first node.

As one embodiment, the time domain resources occupied by the second wake-up signal are associated with the UE ID of a terminal.

As one embodiment, the time domain resources occupied by the first wake-up signal are associated with the ID of the first device group.

As one embodiment, the time domain resources occupied by the second wake-up signal are associated with the ID of the second device group.

**Embodiment 9**

Embodiment 9 illustrates a schematic diagram of one first occasion and one second occasion, as shown in FIG. 9. In FIG. 9, the target occasion set comprises K1 occasions, the first occasion is one of the K1 occasions, and the second occasion is one of the K2 occasions.

As one embodiment, the first occasion is the PO of the first node.

As one embodiment, the second occasion is the PO of a node other than the first node.

As one embodiment, the index of the PO occupied by the first occasion in the corresponding PF is the same as the index of the PO occupied by the second occasion in the corresponding PF.

As one embodiment, the K1 occasions included in the target occasion set correspond to K1 wake-up signals respectively, and the K1 wake-up signals are all used by the first node for Layer-3 measurement.

**Embodiment 10**

Embodiment 10 illustrates a structural block diagram in one first node, as shown in FIG. 10. In FIG. 10, the first node 1000 comprises a first transceiver 1001 and a first receiver 1002.

The first transceiver 1001 receives a first information block and a second information block, wherein the first information block is used for determining a first time period, the second information block is used for determining a target occasion set, and the target occasion set comprises a plurality of occasions;

the first receiver 1002 performs measurement on a first wake-up signal and a second wake-up signal, wherein the first wake-up signal is associated with a first occasion, the second wake-up signal is associated with a second occasion, and the first occasion and the second occasion are different;
in Embodiment 10, the identifier of the first node is used for determining the first occasion, and the first wake-up signal is used by the first node for determining whether to monitor a PDCCH in the first occasion; and the first occasion and the second occasion both belong to the target occasion set, and a time interval between the first occasion and the second occasion is associated with the first time period.

As one embodiment, the identity of the first node is used for determining an identifier corresponding to a first device group, and the identifier corresponding to the first device group is used for determining the first wake-up signal; the second information block is used for indicating an identifier corresponding to a second device group, and the identifier corresponding to the second device group is used for determining the second wake-up signal; the first device group comprises at least one terminal, and the first device group comprises the first node; and the second device group comprises at least one terminal, and the second device group does not comprise the first node.

As one embodiment, a measurement result for the first wake-up signal and a measurement result for the second wake-up signal are filtered to generate a Layer-3 measurement result.

As one embodiment, the first node comprises:

the first receiver 1002 for receiving the first signal, wherein the first signal, the first wake-up signal and the second wake-up signal are used together for determining the Layer-3 measurement result. As one embodiment, the first node comprises:

the first transceiver 1001 for transmitting the target information,
wherein the target information is used for determining that the first node simultaneously supports the first wake-up signal and the second wake-up signal.

As one embodiment, the time domain resources occupied by the first wake-up signal are associated with the time domain resources occupied by the second wake-up signal. As one embodiment, the target occasion set comprises K1 paging occasions; and the K1 paging occasions comprise at least two paging occasions respectively belonging to two paging occasions in two different DRX cycles of one terminal, or the K1 paging occasions comprise at least two paging occasions respectively belonging to two paging occasions in the same DRX cycle of two terminals.

As one embodiment, the first transceiver 1001 comprises at least the first six of the antenna 452, the transmitting device/receiving device 454, the multi-antenna transmitting processor 457, the multi-antenna receiving processor 458, the transmitting processor 468, the receiving processor 456, or the controller/processor 459 in Embodiment 4.

As one embodiment, the first receiver 1002 comprises at least the first four of the antenna 452, the receiving device 454, the multi-antenna receiving processor 458, the receiving processor 456, or the controller/processor 459 in Embodiment 4.

Embodiment 11

Embodiment 11 illustrates a structural block diagram in one second node, as shown in FIG. 11. In FIG. 11, the second node 1100 comprises a second transceiver 1101 and a first transmitter 1102.

The second transceiver 1101 transmits a first information block and a second information block, wherein the first information block is used for determining a first time period, the second information block is used for determining a target occasion set, and the target occasion set comprises a plurality of occasions;

the first transmitter 1102 transmits a first wake-up signal and a second wake-up signal, wherein the first wake-up signal is associated with a first occasion, the second wake-up signal is associated with a second occasion, and the first occasion and the second occasion are different;
in Embodiment 11, a recipient of the first information block comprises a first node, and the first node performs measurement on the first wake-up signal and the second wake-up signal; the identifier of the first node is used for determining the first occasion, and the first wake-up signal is used by the first node for determining whether to monitor a PDCCH in the first occasion; and the first occasion and the second occasion both belong to the target occasion set, and a time interval between the first occasion and the second occasion is associated with the first time period.

As one embodiment, the identity of the first node is used for determining an identifier corresponding to a first device group, and the identifier corresponding to the first device group is used for determining the first wake-up signal; the second information block is used for indicating an identifier corresponding to a second device group, and the identifier corresponding to the second device group is used for determining the second wake-up signal; the first device group comprises at least one terminal, and the first device group comprises the first node; and the second device group comprises at least one terminal, and the second device group does not comprise the first node.

As one embodiment, a measurement result for the first wake-up signal and a measurement result for the second wake-up signal are filtered to generate a Layer-3 measurement result.

As one embodiment, the first node comprises:

The first transmitter 1102 for transmitting a first signal,
wherein the first signal, the first wake-up signal and the second wake-up signal are used together for determining the Layer-3 measurement result. As one embodiment, the first node comprises:

the second transceiver 1101 for receiving target information,
wherein the target information is used for determining that the first node simultaneously supports the first wake-up signal and the second wake-up signal.

According to one aspect of the present application, time domain resources occupied by the first wake-up signal are associated with time domain resources occupied by the second wake-up signal.

As one embodiment, the target occasion set comprises K1 paging occasions; and the K1 paging occasions comprise at least two paging occasions respectively belonging to two paging occasions in two different DRX cycles of a terminal, or the K1 paging occasions comprise at least two paging occasions respectively belonging to two paging occasions in the same DRX cycle of two terminals.

As one embodiment, the second transceiver 1101 comprises at least the first six of the antenna 420, the receiving device/transmitting device 418, the multi-antenna receiving processor 472, the receiving processor 470, the multi-antenna transmitting processor 471, the transmitting processor 414, or the controller/processor 475 in Embodiment 4.

As one embodiment, the first transmitter 1102 comprises at least the first four of the antenna 420, the transmitting device 418, the multi-antenna transmitting processor 471, the transmitting processor 414, or the controller/processor 475 in Embodiment 4.

Those skilled in the art can understand that all or part of the steps in the above method can be completed by instructing the relevant hardware through a program, and the program can be stored in a computer-readable storage medium, such as a read-only memory, a hard disk or an optical disk. Optionally, all or part of the steps in the above embodiment can also be implemented using one or more integrated circuits. Correspondingly, each module unit in the above embodiment can be implemented in the form of hardware or in the form of a software function module. The present application is not limited to any specific form of combination of software and hardware. The first node in the present application includes but is not limited to mobile phones, tablet computers, notebooks, network cards, low-power devices, eMTC devices, NB-IoT devices, vehicle-mounted communication devices, transportation vehicles, vehicles, RSUs (Road Side Units), aircrafts, airplanes, drones, remote-controlled aircrafts and other wireless communication devices. The second node in the present application includes but is not limited to macro-cell base stations, micro-cell base stations, small-cell base stations, home base stations, relay base stations, eNBs, gNBs, transmission-reception points (TRPs), GNSS (Global Navigation Satellite System), relay satellites, satellite base stations, air base stations, RSUs, drones, test devices, such as transceivers or signaling testers that simulate some functions of base stations, and other wireless communication devices.

Those skilled in the art should understand that the present invention can be implemented in other specified forms without departing from its core or basic features. Therefore, the embodiments disclosed at present should be regarded as descriptive rather than restrictive in any way. The scope of the invention is determined by the attached claims rather than the previous description, and all changes within the equivalent meaning and area are considered to be included therein.

## Claims

1. A first node used for wireless communication, comprising:

a first transceiver for receiving a first information block and a second information block, wherein the first information block is used for determining a first time period, the second information block is used for determining a target occasion set, and the target occasion set comprises a plurality of occasions; and
a first receiver for performing measurement on a first wake-up signal and a second wake-up signal, wherein the first wake-up signal is associated with a first occasion, the second wake-up signal is associated with a second occasion, and the first occasion and the second occasion are different,
wherein an identifier of the first node is used for determining the first occasion, and the first wake-up signal is used by the first node for determining whether to monitor a PDCCH in the first occasion; and the first occasion and the second occasion both belong to the target occasion set, and a time interval between the first occasion and the second occasion is associated with the first time period.

2. The first node according to claim 1, wherein an identity of the first node is used for determining an identifier corresponding to a first device group, and the identifier corresponding to the first device group is used for determining the first wake-up signal; the second information block is used for indicating an identifier corresponding to a second device group, and the identifier corresponding to the second device group is used for determining the second wake-up signal; the first device group comprises at least one terminal, and the first device group comprises the first node; the second device group comprises at least one terminal, and the second device group does not comprise the first node.

3. The first node according to claim 1 or 2, wherein a measurement result for the first wake-up signal and a measurement result for the second wake-up signal are filtered to generate a Layer-3 measurement result.

4. The first node according to claim 3, comprising:

   the first receiver for receiving a first signal, wherein the first signal, the first wake-up signal and the second wake-up signal are used together for determining the Layer-3 measurement result.

5. The first node according to any one of claims 1 to 4, comprising: the first transceiver for transmitting target information, wherein the target information is used for determining that the first node simultaneously supports the first wake-up signal and the second wake-up signal.

6. The first node according to any one of claims 1 to 5, wherein time domain resources occupied by the first wake-up signal are associated with time domain resources occupied by the second wake-up signal.

7. The first node according to any one of claims 1 to 6, wherein the target occasion set comprises K1 paging occasions; the K1 paging occasions comprise at least two paging occasions respectively belonging to two paging occasions in two different DRX cycles of one terminal, or the K1 paging occasions comprise at least two paging occasions respectively belonging to two paging occasions in the same DRX cycle of two terminals.

8. A second node used for wireless communication, comprising:

   a second transceiver for transmitting a first information block and a second information block, wherein the first information block is used for determining a first time period, the second information block is used for determining a target occasion set, and the target occasion set comprises a plurality of occasions; and
   a first transmitter for transmitting a first wake-up signal and a second wake-up signal, wherein the first wake-up signal is associated with a first occasion, the second wake-up signal is associated with a second occasion, and the first occasion and the second occasion are different, wherein a recipient of the first information block comprises a first node, and the first node performs measurement on the first wake-up signal and the second wake-up signal; an identifier of the first node is used for determining the first occasion, and the first wake-up signal is used by the first node for determining whether to monitor a PDCCH in the first occasion; and the first occasion and the second occasion both belong to the target occasion set, and a time interval between the first occasion and the second occasion is associated with the first time period.

9. A method for a first node used for wireless communication, comprising:

   receiving a first information block and a second information block, wherein the first information block is used for determining a first time period, the second information block is used for determining a target occasion set, and the target occasion set comprises a plurality of occasions; and
   performing measurement on a first wake-up signal and a second wake-up signal, wherein the first wake-up signal is associated with a first occasion, the second wake-up signal is associated with a second occasion, and the first occasion and the second occasion are different, wherein an identifier of the first node is used for determining the first occasion, and the first wake-up signal is used by the first node for determining whether to monitor a PDCCH in the first occasion; and the first occasion and the second occasion both belong to the target occasion set, and a time interval between the first occasion and the second occasion is associated with the first time period.

10. A method for a second node used for wireless communication, comprising:

transmitting a first information block and a second information block, wherein the first information block is used for determining a first time period, the second information block is used for determining a target occasion set, and the target occasion set comprises a plurality of occasions; and

transmitting a first wake-up signal and a second wake-up signal, wherein the first wake-up signal is associated with a first occasion, the second wake-up signal is associated with a second occasion, and the first occasion and the second occasion are different, wherein a recipient of the first information block comprises a first node, and the first node performs measurement on the first wake-up signal and the second wake-up signal; an identifier of the first node is used for determining the first occasion, and the first wake-up signal is used by the first node for determining whether to monitor a PDCCH in the first occasion; and the first occasion and the second occasion both belong to the target occasion set, and a time interval between the first occasion and the second occasion is associated with the first time period.

EP 4 648 490 A1

Fig. 1

Fig. 2

Fig. 3

21

Fig. 4

Fig. 5

Fig. 6

Fig. 7

First wake-up signal    First occasion

Second wake-up signal    Second occasion

Time

Fig. 8

Target occasion set    First occasion    Second occasion

Time

Fig. 9

1000

First node

First transceiver 1001

First receiver 1002

Fig. 10

1100

Second node

Second transceiver 1101

First transmitter 1102

Fig. 11

## INTERNATIONAL SEARCH REPORT

| International application No. |
|---|
| **PCT/CN2023/141936** |

| | |
|---|---|
| **A. CLASSIFICATION OF SUBJECT MATTER** | |
| H04W 52/02(2009.01)i | |
| According to International Patent Classification (IPC) or to both national classification and IPC | |

| **B. FIELDS SEARCHED** |
|---|
| Minimum documentation searched (classification system followed by classification symbols) |
| IPC: H04W H04Q H04L |
| Documentation searched other than minimum documentation to the extent that such documents are included in the fields searched |
| Electronic data base consulted during the international search (name of data base and, where practicable, search terms used) |
| CNTXT, DWPI, ENTXTC, CNKI, CJFD, 3GPP: 唤醒, 寻呼, 时机, 监测, 检测, 测量, PDCCH, 时间, 时长, 间隔, 间隙, 非连续接收, 第二, wake up, WUS, paging, occasion, monitor, detection, measurement, time, duration, interval, gap, DRX, second |

| **C. DOCUMENTS CONSIDERED TO BE RELEVANT** | | |
|---|---|---|
| Category* | Citation of document, with indication, where appropriate, of the relevant passages | Relevant to claim No. |
| X | CN 110972237 A (SPREADTRUM SEMICONDUCTOR (NANJING) CO., LTD.) 07 April 2020 (2020-04-07) abstract, description, paragraphs 0003-0004 and 0043-0080, and figures 1-11 | 1-10 |
| A | US 2020145921 A1 (CONVIDA WIRELESS, LLC.) 07 May 2020 (2020-05-07) entire document | 1-10 |
| A | HUAWEI et al. "PDCCH-based Power Saving Signal/Channel" *3GPP TSG RAN WG1 Meeting #98bis, R1-1910076*, 20 October 2019 (2019-10-20), entire document | 1-10 |
| A | CN 109429315 A (SHANGHAI LANGBO COMMUNICATION TECHNOLOGY CO., LTD.) 05 March 2019 (2019-03-05) entire document | 1-10 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 April 2024** | **18 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/141936**

| Patent document cited in search report | | | Publication date (day/month/year) | Patent family member(s) | | | Publication date (day/month/year) |
|---|---|---|---|---|---|---|---|
| CN | 110972237 | A | 07 April 2020 | None | | | |
| US | 2020145921 | A1 | 07 May 2020 | WO | 2018204799 | A1 | 08 November 2018 |
| | | | | KR | 20200003173 | A | 08 January 2020 |
| | | | | JP | 2020519196 | A | 25 June 2020 |
| | | | | EP | 3619972 | A1 | 11 March 2020 |
| CN | 109429315 | A | 05 March 2019 | US | 2019069240 | A1 | 28 February 2019 |
| | | | | US | 2020305082 | A1 | 24 September 2020 |
| | | | | CN | 111770561 | A | 13 October 2020 |
| | | | | CN | 111770562 | A | 13 October 2020 |

Form PCT/ISA/210 (patent family annex) (July 2022)